# EUROPEAN PATENT APPLICATION

(11) **EP 4 737 107 A1**
(43) Date of publication of application: **06.05.2026**
(21) Application number: 24851507.4
(22) Date of filing: 10.07.2024
(51) Int. Cl.: B29D 30/08

(54) **SYSTEM FOR SUPPLYING TIRE MATERIALS TO MOLDING DRUM AND METHOD FOR PRODUCING TIRE**

(30) Priority: 08.08.2023 JP 2023129632
(71) Applicant: The Yokohama Rubber Co., Ltd., Hiratsuka-shi, Kanagawa 254-8601 (JP)
(72) Inventor: KONDO, Masatomo, Hiratsuka-shi, Kanagawa 254-8601 (JP); MATSUMURA, Kensuke, Hiratsuka-shi, Kanagawa 254-8601 (JP); NUMAZAKI, Yasushi, Hiratsuka-shi, Kanagawa 254-8601 (JP); KAWAI, Masahiro, Hiratsuka-shi, Kanagawa 254-8601 (JP); OISHI, Junpei, Hiratsuka-shi, Kanagawa 254-8601 (JP); ZENYOJI, Chihiro, Hiratsuka-shi, Kanagawa 254-8601 (JP); WATANABE, Takehiro, Hiratsuka-shi, Kanagawa 254-8601 (JP); SAITO, Dai, Hiratsuka-shi, Kanagawa 254-8601 (JP); MATSUMARU, Teruaki, Hiratsuka-shi, Kanagawa 254-8601 (JP); ONISHI, Kohei, Hiratsuka-shi, Kanagawa 254-8601 (JP); WATANABE, Masayuki, Hiratsuka-shi, Kanagawa 254-8601 (JP)
(74) Representative: Dilg, Haeusler, Schindelmann Patentanwaltsgesellschaft mbH
(86) International application number: PCT/JP2024/024877
(87) International publication number: WO 2025/033078

(57) **Abstract**

Provided are a system for supplying a tire material to a forming drum body and a method of manufacturing a tire that can make a tire forming device compact, further reduce time loss due to replenishment of tire material, and efficiently supply multiple types of tire materials to one forming drum body. Supply units (5 and 6) stocked with different types of tire materials (M1 and M2) are arranged side by side at adjacent stock positions (P1 and P2). Supply directions of the tire materials (M1 and M2) fed out from the supply units 5 and 6 are made to intersect in a plan view. For a band drum (3) and a supply conveyor (6e) at predetermined certain positions, the tire materials (M1 and M2) fed out from the respective supply units (5 and 6) and cut to predetermined lengths are transferred to the supply conveyor (6e) via slide conveyors (5d and 6d) arranged at the respective stock positions (P1 and P2) and a turning conveyor (5e) between the slide conveyors (5d and 6d) and the supply conveyor (6e) and are sequentially supplied to the band drum (3).

## Description

### Technical Field

The present invention relates to a system for supplying a tire material to a forming drum body and a method of manufacturing a tire and particularly relates to a system for supplying a tire material and a method of manufacturing a tire that can make a tire forming device compact, further reduce time loss due to replenishment of tire material, and efficiently supply multiple types of tire materials to one forming drum body.

### Background Art

A tire is manufactured by vulcanizing a green tire. A green tire is formed by layering a number of types of tire materials. The green tire is formed by integrating, for example, an innerliner, a carcass material, a belt member, a tread rubber, and a pair of bead members, on a forming drum.

Various servicers for supplying a number of types of tire materials to a tire molding machine have been proposed (see, for example, Patent Document 1). The servicer proposed in Patent Document 1 includes a plurality of sets of a material holding portion in which each tire material is stocked in a wound state and a movable conveyor, the plurality of sets being slidably movable along a rail. Sliding the desired set allows the desired set to be arranged in series with a fixed-position conveyor and a tire molding machine installed at predetermined positions. The tire material is then fed out from the material holding portion of the set and supplied to the fixed-position conveyor and the tire molding machine via the movable conveyor.

This servicer can replace, by sliding the set emptied of tire material to a standby position, the material holding portion with a new material holding portion with tire material wound while tire material is being supplied from another set. Therefore, the tire material can be supplied to the tire molding machine without long time loss due to replenishment of tire material. To supply multiple types of tire materials to one tire molding machine, however, it is necessary to prepare a set of the material holding portion and the movable conveyor for each type of tire material and install each set slidably along the rail. Since a large space is required to slide a number of sets, it is difficult to make the forming device compact.

In addition, since the set of the material holding portion and the movable conveyor is not light in weight, it is difficult to quickly slide the set. This is disadvantageous in reducing time loss due to replenishment of tire material and is also disadvantageous in quickly supplying the respective tire materials to the tire molding machine. Thus, there is room for improvement in making a tire forming device compact, further reducing time loss due to replenishment of tire material, and efficiently supplying multiple types of tire materials to one forming drum body.

### Citation List

### Patent Literature

Patent Document 1: JP 2000-25124 A

### Summary of Invention

### Technical Problem

An object of the present invention is to provide a system for supplying a tire material to a forming drum body and a method of manufacturing a tire that can make a tire forming device compact, further reduce time loss due to replenishment of tire material, and efficiently supply multiple types of tire materials to one forming drum body.

### Solution to Problem

To achieve the object described above, a system for supplying a tire material to a forming drum body of an embodiment of the present invention includes a supply unit in which a tire material having a band shape is wound and stocked; a forming drum body; and a supply conveyor arranged between the supply unit and the forming drum body and has a configuration in which the tire material is fed out from the supply unit and is cut into tire materials each having a predetermined length and the tire materials are placed flat on the supply conveyor, supplied to the forming drum body, and formed into a cylindrical shape by being wound around the forming drum body. A plurality of the supply units arranged side by side are at a plurality of respective stock positions, the tire materials fed out from the supply units at adjacent stock positions are of different kinds, each of the supply units are arranged such that supply directions of the tire materials intersect each other at a predetermined angle, slide conveyors configured to slide in a parallel direction of each of the supply units are provided at the respective stock positions, a turning conveyor configured to turn in a plan view is provided between each of the slide conveyors and the supply conveyor, for the forming drum body and the supply conveyor installed at predetermined certain positions, the tire materials fed out from one of the supply units at each of the stock positions and cut to predetermined lengths are transferred to the supply conveyor via the corresponding slide conveyors and the turning conveyor and sequentially supplied to the forming drum body, at each of the stock positions, when the one of the supply units stocked with the tire materials becomes empty, the tire materials fed out from the other of the supply units and cut to predetermined lengths are transferred to the supply conveyor via the corresponding slide conveyors and the turning conveyor and sequentially supplied to the forming drum body, and while the tire materials from the other of the supply units are being supplied to the forming drum body, the one of the supply units that is empty is replaced with anew one of the supply units stocked with the tire materials.

A method of manufacturing a tire of an embodiment of the present invention includes: by a forming device including the system for supplying a tire material to a forming drum body, forming a green tire using the tire material; and vulcanizing the green tire.

### Advantageous Effects of Invention

In the system for supplying a tire material to a forming drum body of an embodiment of the present invention, the plurality of supply units are arranged side by side, and the slide conveyors configured to slide in the parallel direction are provided at each the respective stock positions. Each of the supply units is arranged such that the supply directions of the tire materials fed out from the supply units at the respective stock positions intersect each other at a predetermined angle in a plan view, and the turning conveyor is provided between each of the slide conveyors and the supply conveyor. Accordingly, to supply the different types of tire materials to the forming drum body, it is only necessary to slide the respective slide conveyors and turn the turning conveyor instead of moving the respective supply units, eliminating an excessive space. This is thus advantageous in making the tire forming device compact. Since sliding the slide conveyor and turning the turning conveyor does not take a long time, it is advantageous in efficiently supplying multiple types of tire materials to the forming drum body.

At each of the stock positions, when the one of the supply units stocked with the tire materials becomes empty, the tire materials are supplied from the other of the supply units via the slide conveyor. While the tire materials are being supplied from the other of the supply units, the one of the supply units that is empty is replaced with a new one of the supply units stocked with the tire material. Therefore, from each of the stock positions, the tire materials can be continuously supplied from any of the supply units to the forming drum body via the slide conveyor and the turning conveyor. This is thus advantageous in further reducing time loss due to replenishment of tire material and improving work efficiency in the tire molding step. Accordingly, it is not necessary to place and stock an extra amount of the tire material on the supply conveyor to reduce time loss due to replenishment of tire material, allowing the length of the supply conveyor to be minimized. As a result, it is more advantageous in making the tire forming device compact.

In the method of manufacturing a tire of an embodiment of the present invention, using the forming device including the system for supplying a tire material to a forming drum body is advantageous in saving space and manufacturing tires with high productivity in a space-saving manner.

### Brief Description of Drawings

FIG. 1 is an explanatory diagram illustrating a system for manufacturing a tire including an embodiment of a system for supplying a tire material to a forming drum body in a plan view.
FIG. 2 is an explanatory diagram illustrating each drum of a forming device in FIG. 1 in a front view.
FIG. 3 is an explanatory diagram illustrating a supply path from a supply unit of an innerliner to a band drum in a side view.
FIG. 4 is an explanatory diagram illustrating a supply path from a supply unit of a carcass material to the band drum in a side view.
FIG. 5 is an explanatory diagram illustrating a supply path from a supply unit of a side portion to the band drum in a side view.
FIG. 6 is an explanatory diagram illustrating a supply path from a supply unit of a belt member to a belt drum in a side view.
FIG. 7 is an explanatory diagram illustrating a supply path from a supply unit of a tread portion to the belt drum in a side view.
FIG. 8 is an explanatory diagram illustrating a supply path from a supply unit of a belt reinforcing member to the belt drum in a side view.
FIG. 9 is an explanatory diagram illustrating a state in which the innerliner, the carcass material, and the side portion are supplied to the band drum in a plan view.
FIG. 10 is an explanatory diagram illustrating a state in which the innerliner, carcass material, and side portion cut to predetermined lengths in FIG. 9 are moved forward in a plan view.
FIG. 11 is an explanatory diagram illustrating a state in which a supply conveyor on which the innerliner of FIG. 10 is placed is caused to turn 90 degrees and the side portion cut to the predetermined length is moved to the supply conveyor in a plan view.
FIG. 12 is an explanatory diagram illustrating a state in which the innerliner and carcass material cut to the predetermined lengths in FIG. 11 are moved toward the band drum in a plan view.
FIG. 13 is an explanatory diagram illustrating a state in which the innerliner and carcass material cut to the predetermined lengths in FIG. 12 are wound around the band drum in a plan view.
FIG. 14 is an explanatory diagram illustrating a state in which the band drum in FIG. 13 is moved in a width direction and the side portion cut to the predetermined length is wound around an outer circumferential surface of the band drum to form an inner circumferential member in a plan view.
FIG. 15 is an explanatory diagram illustrating a state in which a pair of bead members is externally fitted to the formed inner circumferential member in FIG. 14 in a plan view.
FIG. 16 is an explanatory diagram illustrating a state in which the belt member and tread portion cut to the predetermined lengths are supplied to a belt drum in a plan view.
FIG. 17 is an explanatory diagram illustrating a state in which the belt member and tread portion cut to the predetermined lengths in FIG. 16 are moved toward the belt drum in a plan view.
FIG. 18 is an explanatory diagram illustrating a state in which the belt member cut into the predetermined length in FIG. 17 is wound around a belt drum on one side in a plan view.
FIG. 19 is an explanatory diagram illustrating a state in which the belt drum in FIG. 18 is caused to turn 180 degrees clockwise and a belt reinforcing member is wound around a belt member wound around the belt drum on one side.
FIG. 20 is an explanatory diagram illustrating a state in which the tread portion cut to the predetermined length in FIG. 19 is wound around the belt drum on one side to form an outer circumferential member and the belt member is wound around the belt drum on the other side in a plan view.
FIG. 21 is an explanatory diagram illustrating a state in which the belt drum in FIG. 20 is caused to turn 180 degrees counterclockwise in a plan view.
FIG. 22 is an explanatory diagram illustrating a state in which an inner circumferential member and a pair of bead members are externally fitted to a shaping drum on one side in a plan view.
FIG. 23 is an explanatory diagram illustrating a state in which the shaping drum in FIG. 22 is caused to turn 180 degrees clockwise and the belt reinforcing member is wound around the belt drum on the other side in a plan view.
FIG. 24 is an explanatory diagram illustrating a state in which the outer circumferential member transferred from the belt drum is externally fitted to the shaping drum on one side in FIG. 23 and the inner circumferential member and the pair of bead members are externally fitted to the shaping drum on the other side in a plan view.
FIG. 25 is an explanatory diagram illustrating a state in which the shaping drum in FIG. 24 is caused to turn 180 degrees counterclockwise and the belt member is wound around the belt drum on one side in a plan view.
FIG. 26 is an explanatory diagram illustrating a state in which a green tire is taken out from the shaping drum on one side in FIG. 25 and the belt drum is caused to turn 180 degrees counterclockwise in a plan view.
FIG. 27 is an explanatory diagram illustrating a vulcanization device vulcanizing a green tire in FIG. 26 partially enlarged in a longitudinal cross-sectional view.

### Description of Embodiments

A system for supplying a tire material to a forming drum body and a method of manufacturing a tire according to an embodiment of the present invention will be described on the basis of embodiments illustrated in the drawings.

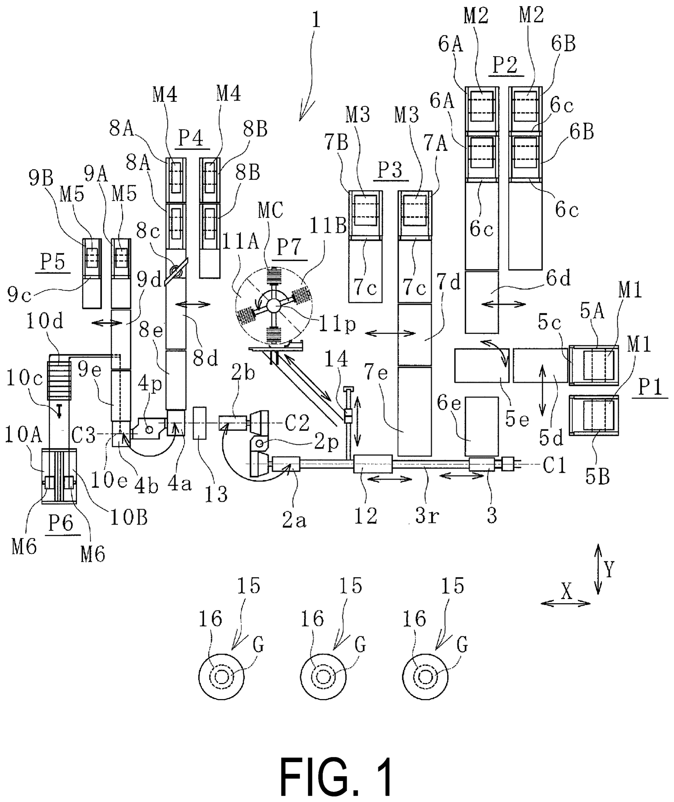

A tire manufacturing system illustrated in FIG. 1 includes a forming device 1 and a vulcanization device 15. The forming device 1 includes a system for supplying a tire material to a forming drum body (hereinafter, referred to as a supply system) of an embodiment of the present invention. A plurality of kinds of unvulcanized tire members M are layered using the forming device 1 to form a green tire G. The formed green tire G is vulcanized by the vulcanization device 15 to manufacture a tire T. A vulcanization mold 16 corresponding to a tire specification is mounted to the vulcanization device 15. Various known vulcanization devices 15 can be used.

The green tire G includes, as the tire members M, at least an inner circumferential member MA having an innerliner M1, a carcass material M2, and a side portion M3, an outer circumferential member MB having a belt member M4 and a tread portion M5, and a pair of bead members MC. In this embodiment, the outer circumferential member MB further includes a belt reinforcing member M6. The belt reinforcing member M6 is optional, and other types of materials are employed for the tire member M as needed. In the following, the innerliner M1, the carcass material M2, the side portion M3, the belt member M4, the tread portion M5, and the belt reinforcing member M6 are referred to as tire materials M1, M2, M3, M4 M5, and M6, respectively. The tire materials M1 to M5 have band-like shapes, and the tire material M6 has a linear shape (thin band-like shape).

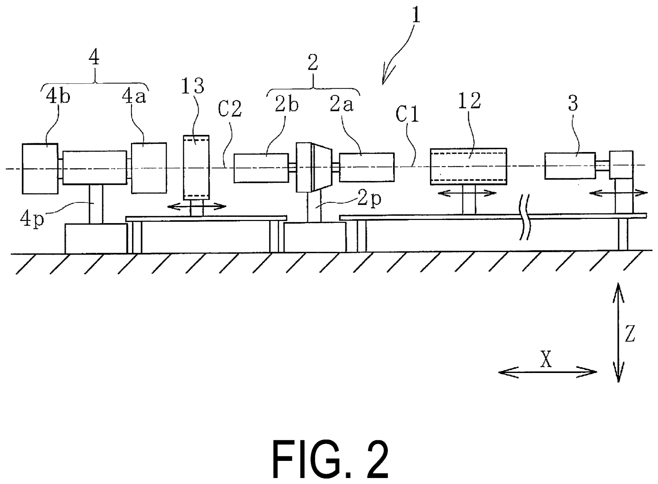

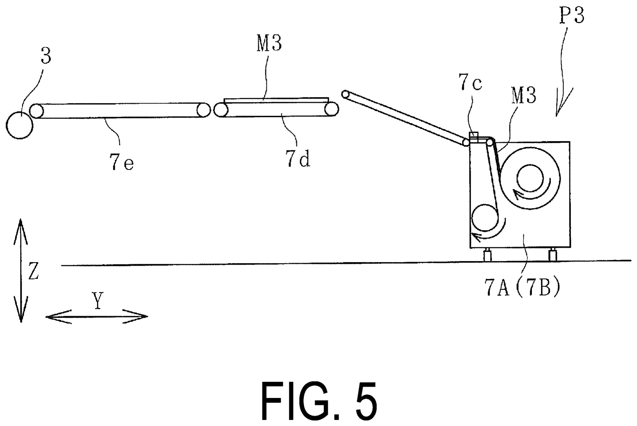

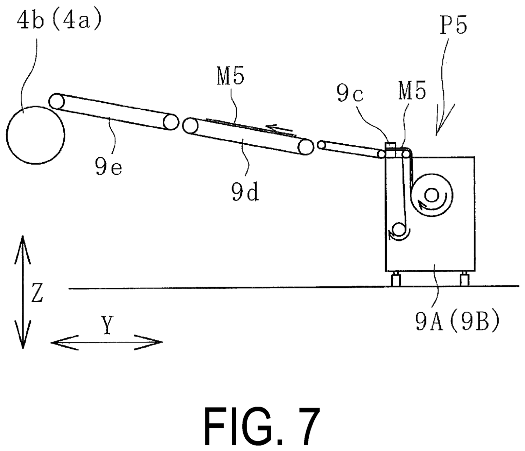

As illustrated in FIGS. 1 to 8, the forming device 1 includes three types of drums (forming drum bodies), namely, a shaping drum 2 (2a and 2b), a band drum 3, and a belt drum 4 (4a and 4b), supply units 5 (5A and 5B), 6 (6A and 6B), 7 (7A and 7B), 8 (8A and 8B), 9 (9A and 9B), and 10 (10A and 10B) for respective tire materials M1, M2, M3, M4, M5, and M6, and a bead supply unit 11 (11A and 11B) for a pair of bead members MC. In the drawings, X, Y, and Z arrows indicate a width direction, a depth direction, and a height direction of the forming device 1, respectively, and are directions orthogonal to each other.

The two shaping drums 2 (2a and 2b), one band drum 3, and two belt drums 4 (4a and 4b) are provided, and the shaping drums 2 (2a and 2b) are arranged between the band drum 3 and the belt drums 4 in the X direction. In this embodiment, the two shaping drums 2a and 2b are provided at positions after turning 180 degrees about a turning shaft 2p in a plan view. The two shaping drums 2a and 2b are alternately fixedly arranged at the same position by turning 180 degrees clockwise and counterclockwise about the turning shaft 2p.

A drum axial center C1 of the band drum 3 extends in the X direction and is movable along a guide rail 3r extending in the X direction. The two belt drums 4a and 4b are provided at positions after turning 180 degrees about a turning shaft 4p in a plan view. The two belt drums 4a and 4b are alternately fixedly arranged at the same position by turning 180 degrees clockwise and counterclockwise about the turning shaft 4p.

When the respective shaping drums 2a and 2b turn about the turning shaft 2p and are fixedly arranged on the band drum 3 side and the belt drum 4 side, the respective drum axial centers C1 and C2 extend in the X direction (become parallel to the X direction). The drum axial centers C1 of the shaping drum 2 and the band drum 3 that turn and are fixedly arranged on the band drum 3 side are parallel to the X direction and coincide with each other in the Y and Z directions. That is, the drum axial centers C1 of the shaping drum 2 and the band drum 3 adjacent to each other coincide with each other in the X, Y and Z directions.

When the belt drums 4a and 4b turn about the turning shaft 4p and are fixedly arranged on the shaping drum 2 side and a side opposite to the shaping drum 2, the respective drum axial centers C2 and C3 extend in the X direction (become parallel to the X direction). The drum axial centers C2 of the belt drum 4 that turn and are fixedly arranged on the shaping drum 2 side and the shaping drum 2 that turn and are fixedly arranged on the belt drum 4 side are parallel to the X direction and coincide with each other in the Y and Z directions. That is, the drum axial centers C2 of the belt drum 4 and the shaping drum 2 adjacent to each other coincide with each other in the X, Y, and Z directions.

The respective supply units 5 to 10 are arranged at stock positions P1 to P6 of the respective tire materials M1 to M6. The bead supply unit 11 is arranged at a stock position P7 of the bead member MC. At each of the stock positions P1 to P6, a plurality of corresponding supply units are arranged side by side. That is, the supply units 5A and 5B are arranged side by side at the stock position P1, the supply units 6A and 6B are arranged side by side at the stock position P2, the supply units 7A and 7B are arranged side by side at the stock position P3, the supply units 8A and 8B are arranged side by side at the stock position P4, the supply units 9A and 9B are arranged side by side at the stock position P5, and the supply units 10A and 10B are arranged side by side at the stock position P6.

In this embodiment, one tire material M1 and one tire material M5 cut to predetermined lengths, two tire materials M2 and two tire materials M4 cut to predetermined lengths, and a pair of tire materials M3 cut to predetermined lengths are used for one green tire G. Therefore, at the stock position P2, two supply units 6A and two supply units 6B are respectively arranged in tandem (arranged in series in the Y direction). At the stock position P4, two supply units 8A and two supply units 8B are respectively arranged in tandem (arranged in series in the Y direction). To form one green tire G, two tire materials M2 are sequentially supplied from either two supply units 6A arranged in tandem or two supply units 6B arranged in tandem, and two tire materials M4 are sequentially supplied from either two supply units 8A arranged in tandem or two supply units 8B arranged in tandem. A pair of tire materials M3 is stocked in each of the supply units 7A and 7B, and the pair of tire materials M3 is sequentially supplied from any one of the supply units 7A and 7B.

Each of the supply units 5 to 10 has a winding core about which each of the tire materials M1 to M6 is wound and stocked. Each of the tire materials M1 to M5 is wound about the winding core together with a release liner. The tire material M6 is wound about the winding core without a release liner. In this embodiment, each of the tire materials M1 to M6 is wound and stocked in a state of an elongated body, but the tire materials M1 to M5 can also be stocked in a state where a number of tire materials cut to predetermined lengths are wound about the winding cores.

The bead supply unit 11 has an annular rack that horizontally turns about a turning shaft 11p, and a number of bead members MC are hung on the rack. The rack is divided into two regions, units 11A and 11B in a circumferential direction. A predetermined number of pairs of bead members MC are hung on the respective bead supply units 11A and 11B, and the rack turns in the circumferential direction, causing the respective bead supply units 11A and 11B to sequentially move to a supply position and a standby position. The pair of bead members MC is sequentially supplied from the bead supply unit 11 moved to the supply position.

The tire materials M1, M2, and M3 are supplied from the respective supply units 5, 6, and 7 through respective supply paths to the band drum 3. The tire materials M4, M5, and M6 are supplied from the respective supply units 8, 9, and 10 through respective supply paths to the belt drum 4.

A cutter 5c, a slide conveyor 5d, a turning conveyor 5e, and a supply conveyor 6e are arranged between the supply unit 5 and the band drum 3. A cutter 6c, a slide conveyor 6d, the turning conveyor 5e, and the supply conveyor 6e are arranged between the supply unit 6 and the band drum 3. A cutter 7c, a slide conveyor 7d and a supply conveyor 7e are arranged between the supply unit 7 and the band drum 3.

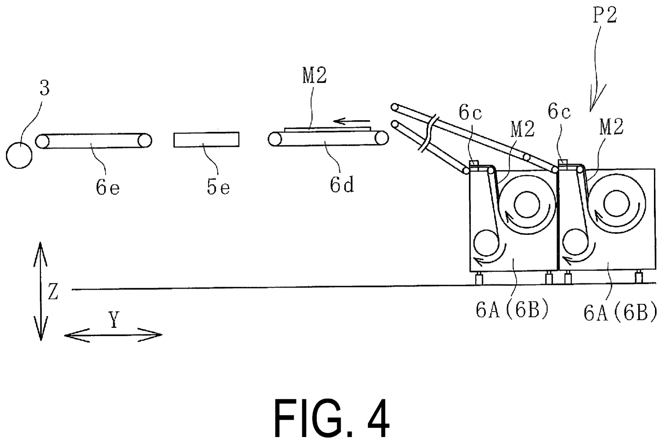

As illustrated in FIG. 4, each of the supply units 6 arranged in tandem at the stock position P2 has the cutter 6c, and supply guides are installed in two stages above and below between each cutter 6c and one slide conveyor 6d. That is, the material M2 fed out from the supply unit 6 arranged on a side close to the band drum 3 in the Y direction is supplied to the slide conveyor 6d through the supply guide arranged on the lower side. The tire material M2 fed out from the supply unit 6 arranged on a side far from the band drum 3 in the Y direction is supplied to the slide conveyor 6d through the supply guide arranged on the upper side.

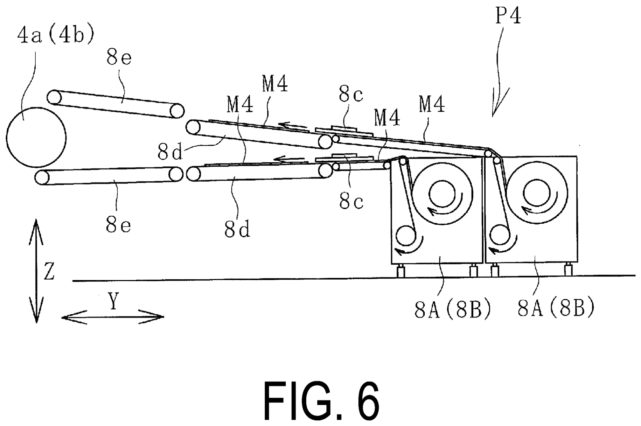

Between the respective supply units 8 and 9 and the belt drum 4, cutters 8c and 9c, slide conveyors 8d and 9d, and supply conveyors 8e and 9e are arranged. As illustrated in FIG. 6, each of the supply units 8 arranged in tandem at the stock position P4 has the cutter 8c, the slide conveyor 8d, and the supply conveyor 8e, and the cutters 8c, the slide conveyors 8d, and the supply conveyors 8e are installed in two stages above and below, respectively. That is, the material M4 fed out from the supply unit 8 arranged on a side close to the belt drum 4 in the Y direction is supplied to the slide conveyor 8d and the supply conveyor 8e arranged on the lower side through the supply guide arranged on the lower side. The tire material M4 fed out from the supply unit 6 arranged on a side far from the belt drum 4 in the Y direction is supplied to the slide conveyor 8d and the supply conveyor 8e arranged on the upper side through the supply guide arranged on the upper side. In this embodiment, the cutter 8c arranged above slides together with the slide conveyor 8d arranged above, and the cutter 8c arranged below slides together with the slide conveyor 8d arranged below.

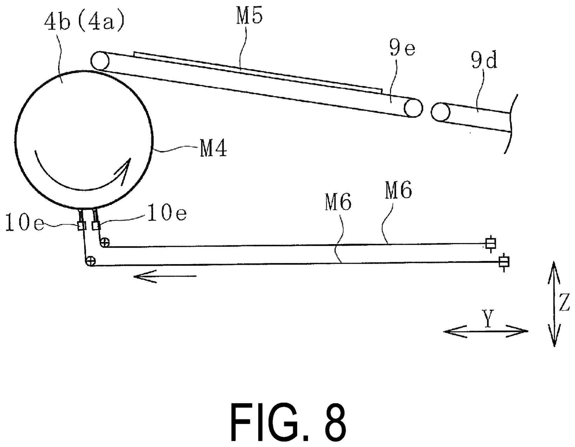

A cutter 10c, a festoon portion 10d, and a head 10e are arranged between the supply unit 10 and the belt drum 4. As illustrated in FIG. 8, the tire materials M6 fed out from the respective supply units 10A and 10B are supplied to the separate heads 10e and 10e through the individual supply paths, respectively. The respective heads 10e and 10e are arranged in tandem in the Y direction below the belt drum 4.

The cutters 5c, 6c, 7c, 8c, and 9c cut the respective tire materials M1, M2, M3, M4, and M5 to predetermined lengths preset. The slide conveyors 5d, 6d, 7d, 8d, and 9d, the turning conveyor 5e, and the supply conveyors 6e, 7e, 8e, and 9e are belt conveyors that convey the respective tire materials M1, M2, M3, M4, and M5 in a flat position.

The turning conveyor 5e is installed between the respective slide conveyor 5d and 6d and the supply conveyor 6e in a plan view and turns horizontally at that position. In this embodiment, a turning angle of the turning conveyor 5e is set to 90 degrees. The slide conveyors 5d, 6d, 7d, 8d, and 9d are respectively arranged for the supply units 5, 6, 7, 8, and 9 arranged side by side at the respective stock positions P1 to P5. For example, at the stock position P1 of the tire material M1, one slide conveyor 5d is arranged which slides in the width direction of the supply unit 5 (5A and 5B) arranged side by side. The slide conveyor 5d moves in the width direction between the respective supply units 5A and 5B, in front of the supply direction of the tire material M1. The same configuration is provided at the other stock positions P2, P3, P4, and P5.

The cutter 10c cuts rear end portions of the tire materials M6 in joining the tire materials M6 each other. The festoon portion 10d stores a predetermined necessary amount (necessary length) of the tire material M6. The head 10e guides the tire material M6 passing through the festoon portion 10d toward the drum surface of the belt drum 4. The tire material M6 is supplied to the belt drum 4 in a state of an elongated body and is cut to a predetermined length by the head 10e on the belt drum 4.

A band transfer machine 12 is arranged between the band drum 3 and the shaping drum 2. A belt transfer machine 13 is arranged between the belt drum 4 and the shaping drum 2. A bead transfer machine 14 is arranged between the bead supply unit 11 and the shaping drum 2.

In the band drum 3, a cylindrical inner circumferential member MA is formed using the supplied tire materials M1 to M3. In the belt drum 4, a cylindrical outer circumferential member MB is formed using the supplied tire materials M4 to M6. The band transfer machine 12 transfers the inner circumferential member MA from the band drum 3 to the shaping drum 2. The belt transfer machine 13 transfers the outer circumferential member MB from the belt drum 4 to the shaping drum 2. The bead transfer machine 14 transfers a pair of bead members MC from one of the bead supply units 11A and 11B and externally fits the bead members MC on the cylindrical inner circumferential member MA. In the shaping drum 2, a cylindrical green tire G is formed using the inner circumferential member MA (M1 to M3), the outer circumferential member MB (M4 to M6), and the pair of bead members MC.

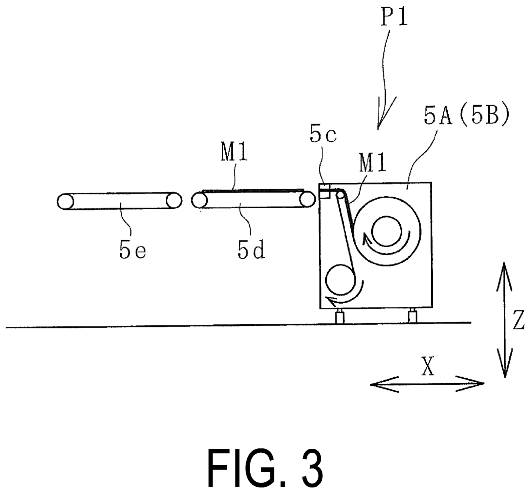

The supply system of a typical embodiment of the present invention is a supply system for supplying the tire materials M1 and M2 to the band drum (forming drum body) 3. That is, as illustrated in FIGS. 3, 4, and 9 to 13, the supply system of an embodiment of the present invention includes the supply units 5 and 6 at adjacent stock positions M1 and M2 where the tire materials P1 and P2 are wound and stocked, the band drum 3, and the supply conveyor 6e arranged between the supply units 5 and 6 and the band drum 3. Then, at the respective stock positions P1 and P2, the respective supply units 5 and 6 including a plurality of supply units 5A and 5B and supply units 6A and 6B arranged side by side are arranged such that the supply directions of the tire materials M1 and M2 intersect each other at a predetermined angle S in a plan view, the tire materials M1 and M2 fed out from the supply units 5 and 6 at the respective stock positions P1 and P2 being of different kinds. In this embodiment, the predetermined angle S is set to 90 degrees, and thus the supply directions of the tire materials M1 and M2 fed out from the respective supply units 5 and 6 are orthogonal to each other in a plan view. At the respective stock positions P1 and P2, the slide conveyors 5d and 6d that slide in the parallel direction of the respective supply units 5 and 6, and the turning conveyor 5e that turns in a plan view between the respective slide conveyors 5d and 6d and the supply conveyor 6e are provided. The predetermined angle S is, for example, 60 degrees or more and 120 degrees or less, and preferably 85 degrees or more and 95 degrees or less. By setting the predetermined angle S within such a range, the supply units 5 and 6 at the adjacent stock positions P1 and P2 can be intensively arranged, which is advantageous in making the forming device 1 compact. The turning angle of the turning conveyor 5e is set to the same angle as the predetermined angle S.

For the band drum 3 and the supply conveyor 6e installed at predetermined certain positions, the tire materials M1 and M2 fed out from the supply units 5 and 6 at the respective stock positions P1 and P2 and cut to predetermined lengths are transferred to the supply conveyor 6e via the corresponding slide conveyors 5d and 6d and the turning conveyor 5e and sequentially supplied to the band drum 3. In this embodiment, when the tire materials M1 and M2 are supplied, the band drum 3 and the supply conveyor 6e installed at predetermined certain positions and the supply unit 6A on one side at the stock position P2 on one side are arranged in series (arranged in tandem in the Y direction).

Next, an example of a procedure of a method of manufacturing a tire using the manufacturing system will be described. In this manufacturing method, green tires G are sequentially and continuously formed by the forming device 1 including the supply system of an embodiment of the present invention. The forming device 1 of the manufacturing system is provided with the supply system of an embodiment of the present invention in order to supply two different types of tire materials M1 and M2. The forming device 1 may also be provided with the supply system of an embodiment of the present invention in order to supply other types of tire materials.

In the forming device 1, forming works of a plurality of green tires G are performed around the same time. The green tires G formed around the same time may all have the same specification but may also be switched to green tires G of different specifications in the middle. When the forming of a number of green tires G is continued without changing the tire specifications, at the respective stock positions P1 to P6, the tire materials M1 to M6 of the same specification are stocked in necessary amounts in the respective supply units 5 to 10 arranged side by side. At the stock position P7, the bead members MC of the same specification are stocked in necessary amounts in the respective bead supply units 11A and 11B.

When the tire specification is changed in the middle to form the green tire G, at the respective stock positions P1 to P6, the tire materials M1 to M6 corresponding to the tire specification of the green tire G to be formed are stocked in necessary amounts in each of the supply units 5A to 10A on one side and the supply units 5B to 10B on the other side. At the stock position P7, the bead members MC corresponding to the tire specification of the green tire G to be formed are stocked in necessary amounts in each of the bead supply units 11A and 11B.

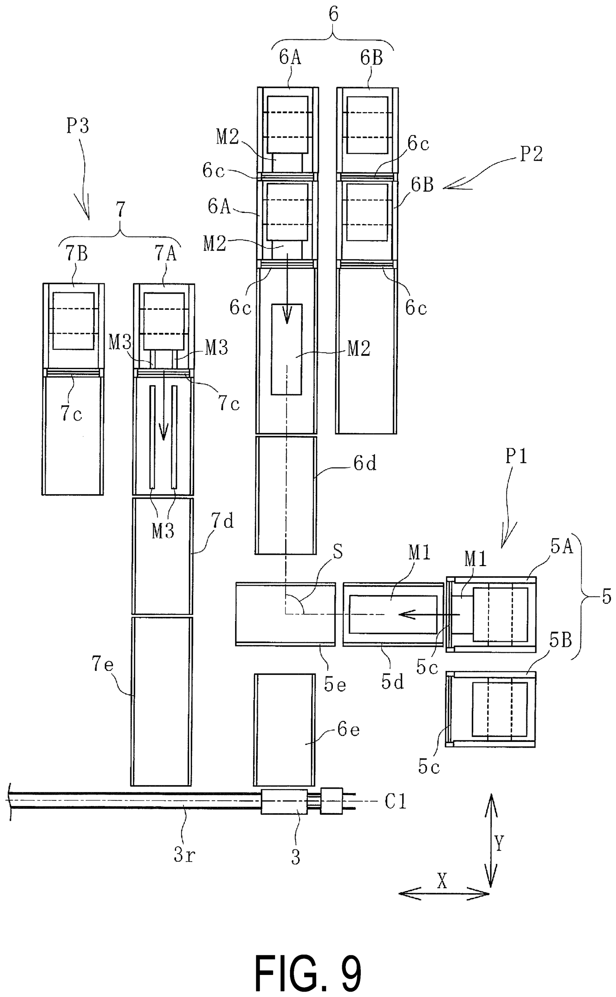

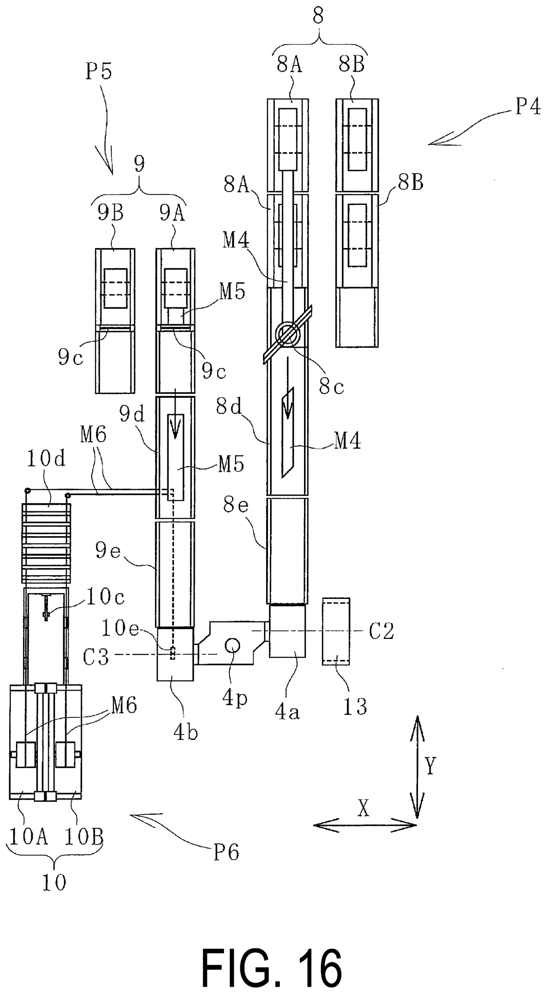

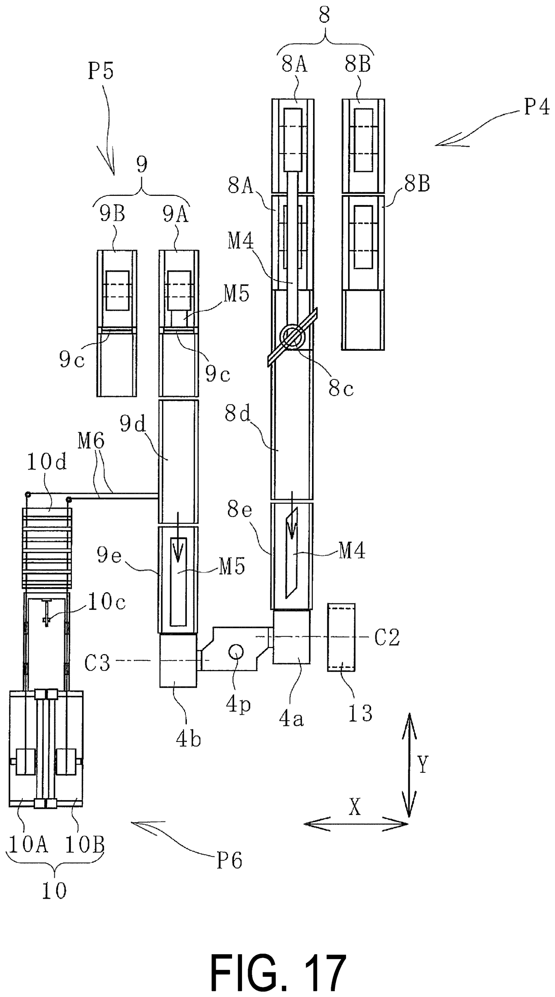

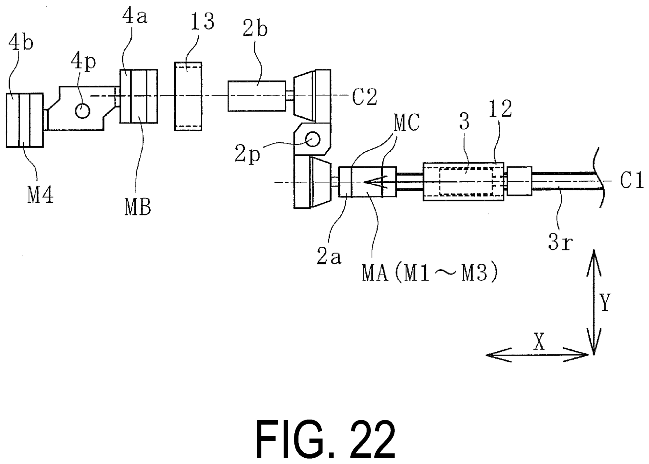

In this manufacturing method, the cylindrical inner circumferential member MA and the cylindrical outer circumferential member MB are formed simultaneously. The inner circumferential member MA is formed as illustrated in FIGS. 9 to 14, and the outer circumferential member MB is formed as illustrated in FIGS. 16 to 21. Then, as illustrated in FIGS. 22 to 26, the green tire G is formed using the inner circumferential member MA, the pair of bead members MC, and the outer circumferential member MC.

As illustrated in FIGS. 9 to 14, the respective tire materials M1 to M3 of the inner circumferential member MA are supplied, in a state cut to predetermined lengths in advance, to the band drum 3 from the respective stock positions P1 to P3 via the corresponding slide conveyors 5d to 7d by the respective supply conveyors 6e and 7e. In the bunt drum 3, the inner circumferential member MA is formed using the respective tire materials M1 to M3 cut to the predetermined lengths.

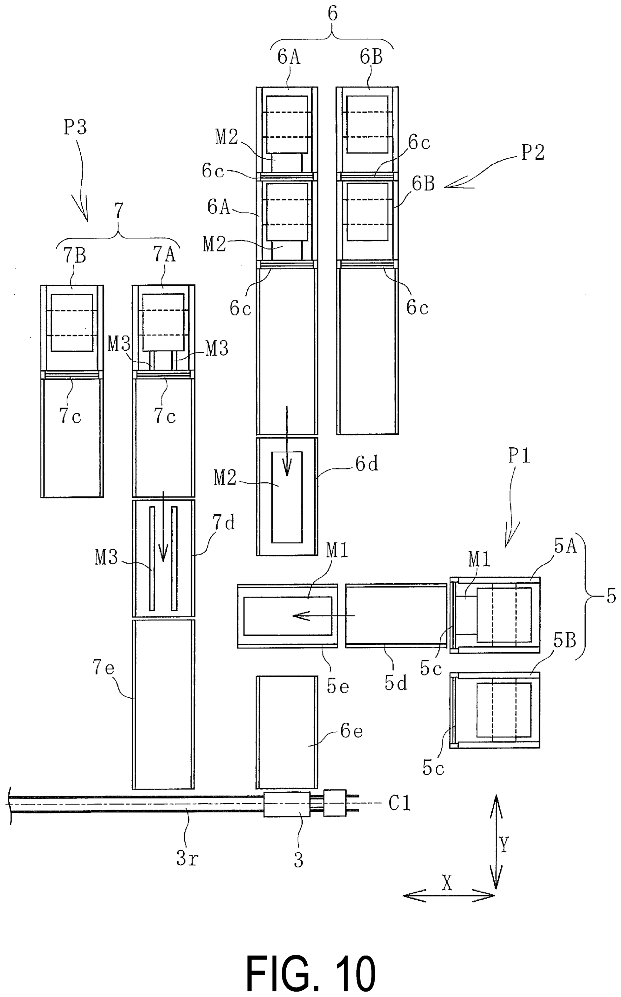

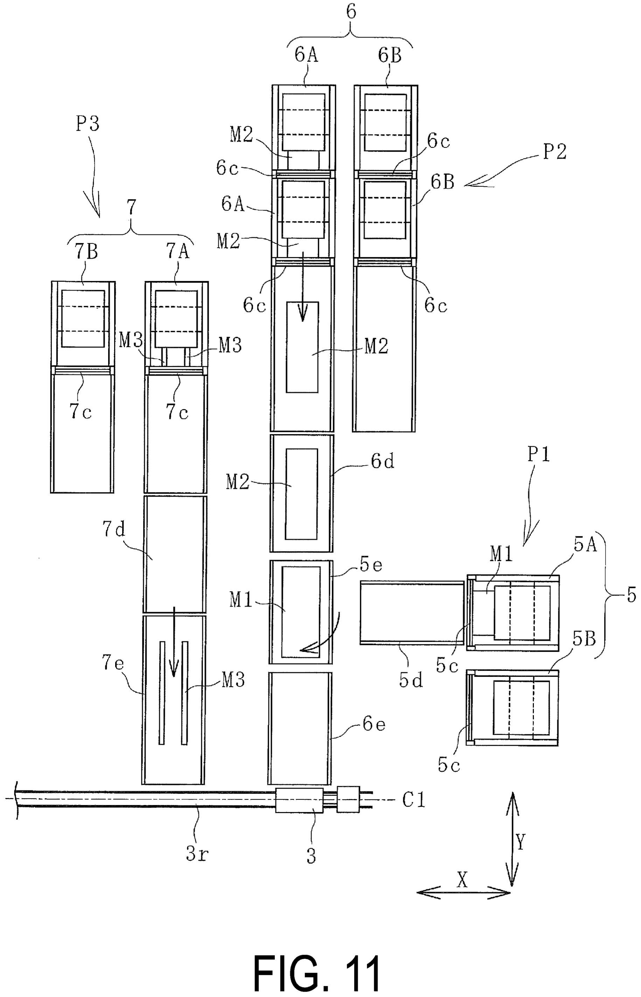

Specifically, the tire materials M1, M2, M2, and M3 fed out from the supply units 5A, 6A, 6A, and 7A on one side are cut to predetermined lengths by the respective cutters 5c, 6c, 6c, and 7c, placed on the slide conveyors 5d, 6d, 6d, and 7d arranged in front of the respective the supply units 5A, 6A, 6A, and 7A on one side, and conveyed to the supply conveyors 6e, 6e, 6e, and 7e. The tire materials M1 and M2 are passed via the turning conveyor 5e. The turning conveyor 5e is turnable by 90 degrees in a plan view and is in tandem with the slide conveyor 5d in the X direction as illustrated in FIGS. 9 and 10 when receiving the tire material M1 from the slide conveyor 5d. The turning conveyor 5e having received the tire material M1 from the slide conveyor 5d turns 90 degrees and is in tandem with the slide conveyor 6d and the supply conveyor 6e in the Y direction as illustrated in FIG. 11.

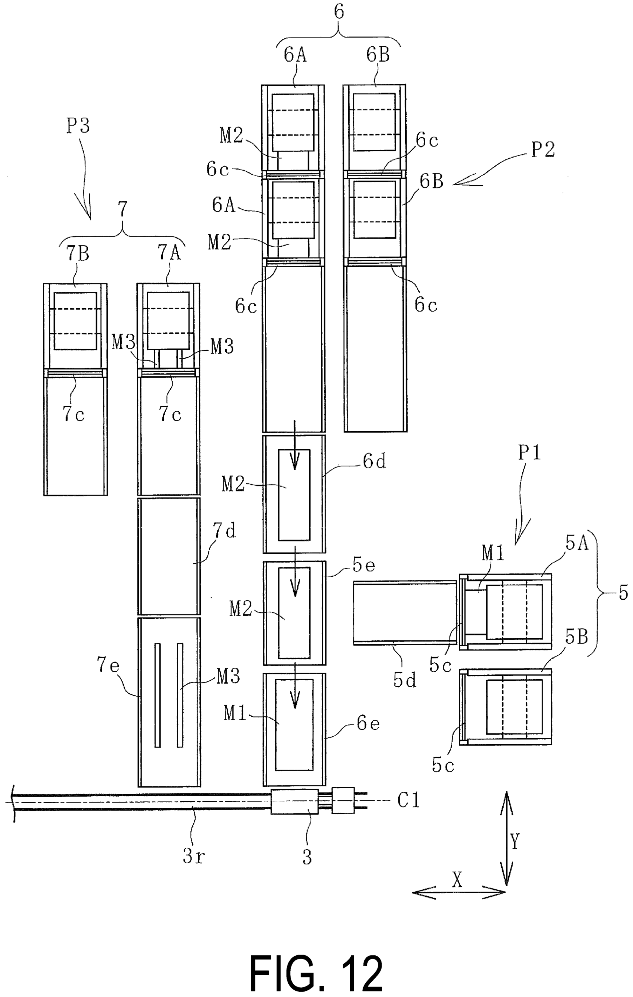

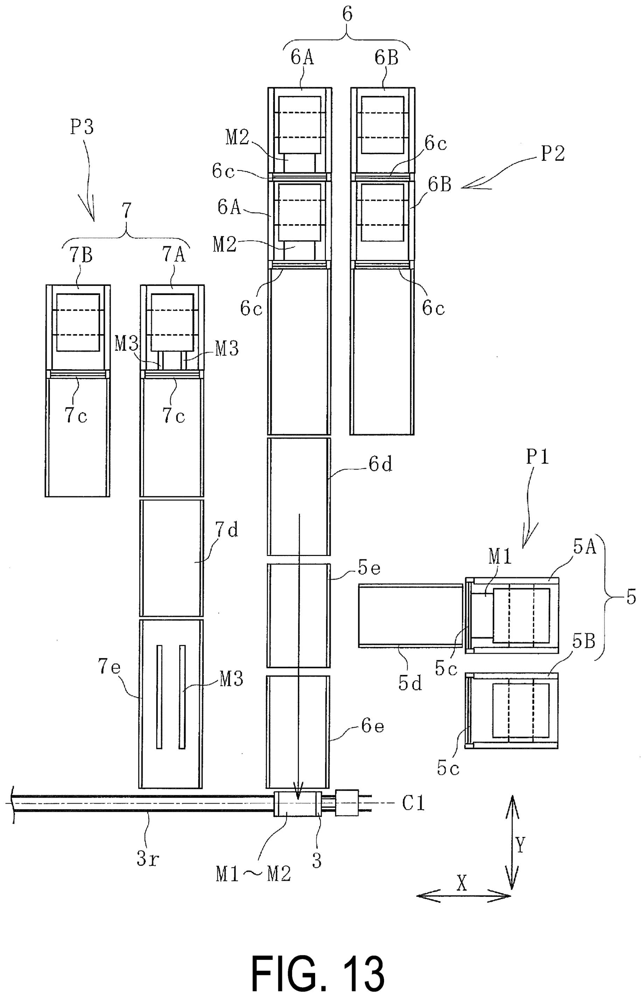

As illustrated in FIG. 12, the tire material M1 fed out from the supply unit 5A on one side, and the tire materials M2 and M2 supplied from each of the supply units 6A and 6A on one side arranged in tandem are arranged in series with the band drum 3. As illustrated in FIG. 13, the tire materials M1, M2, and M2 arranged in series and cut to predetermined lengths are sequentially wound around the band drum 3 while rotating the band drum 3 in one direction about the drum axial center C1 and are thus formed into a cylindrical shape and layered.

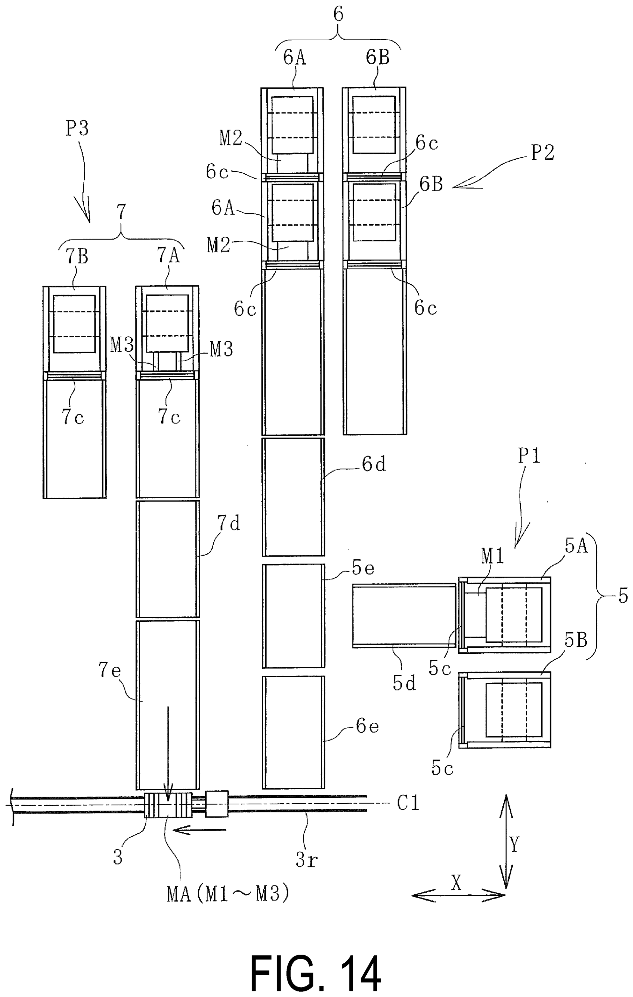

While the tire materials M1, M2, and M2 are wound around the band drum 3, formed into a cylindrical shape, and layered, a pair of tire materials M3 fed out from the supply unit 7A on one side and cut to predetermined lengths is conveyed to the supply conveyor 7e. Next, the band drum 3 located in front of the supply conveyor 6e is moved in the X direction as illustrated in FIG. 14 and installed in front of the supply conveyor 7e. Thereafter, the pair of tire materials M3 placed on the conveying conveyor 7e and cut to predetermined lengths is wound around the band drum 3 while rotating the band drum 3 about the drum axial center C1 and are formed into a cylindrical shape and layered. Thereby, the cylindrical inner circumferential member MA in which the tire materials M1, M2, and M3 are layered in this order is formed. In this manner, the inner circumferential member MA is sequentially and continuously formed.

To describe the procedure of supplying the tire materials M1, M2, and M2 cut to the predetermined lengths to the band drum 3 in more detail, as illustrated in FIGS. 12 and 13, an entire length and a widthwise position (for example, a widthwise center position) over the entire length of each of the tire materials M1, M2, and M2 are detected by sensors installed above the tire materials, in the course of being conveyed from the turning conveyor 5e to the supply conveyor 6e. The respective tire materials M1, M2, and M2 are then wound appropriately around the band drum 3 using detection data from the sensors. For example, in winding the tire material M1 around the band drum 3 from the state of FIG. 12, a moving amount (conveying speed) of the supply conveyor 6e with respect to a rotating moving amount (rotation speed) of the band drum 3 is adjusted based on the entire length data of the tire material M1 detected by the sensor, and the band drum 3 is moved in the width direction based on the detected widthwise position data to adjust the widthwise position of the tire material M1 with respect to the band drum 3. Simultaneously with the winding operation of the tire material M1 around the band drum 3, the first tire material M2 is conveyed from the turning conveyor 5e to the supply conveyor 6e, and an entire length and a widthwise position over the entire length of the tire material M2 are detected by the sensors. Furthermore, at the same time, the second tire material M2 is conveyed from the slide conveyor 6d to the turning conveyor 5e. Next, in winding the first tire material M2 placed on the supply conveyor 6e around the band drum 3, the rotation speed of the band drum 3 is adjusted based on the entire length data of the first tire material M2 detected by the sensor, and the band drum 3 is moved in the width direction based on the detected widthwise position data to adjust the widthwise position of the first tire material M2 with respect to the band drum 3. Simultaneously with the winding operation of the first tire material M1 around the band drum 3, the second tire material M2 is conveyed from the turning conveyor 5e to the supply conveyor 6e, and an entire length and a widthwise position over the entire length of the second tire material M2 are detected by the sensors. Next, in winding the second tire material M2 placed on the supply conveyor 6e around the band drum 3, the rotation speed of the band drum 3 is adjusted based on the entire length data of the second tire material M2 detected by the sensor, and the band drum 3 is moved in the width direction based on the detected widthwise position data to adjust the widthwise position of the second tire material M2 with respect to the band drum 3.

By the above supply procedure, the respective tire materials M1, M2, and M2 are continuously wound around the band drum 3 while being centered at the widthwise center of the band drum 3 and are spliced in the longitudinal direction without excess or deficiency. In the above supply procedure, in a series of processes of continuously supplying the tire materials M1, M2, and M2 to the band drum 3, the entire lengths and the widthwise positions over the entire lengths of the respective tire materials are detected, and the operation of the band drum 3 is controlled based on the respective detection data. As a result, the respective tire materials M1, M2, and M2 are centered with respect to the band drum 3 and wound thereon in a preset short cycle time before being layered, and thus a high-quality cylindrical multilayer structure with suppressed layering deviation can be efficiently formed.

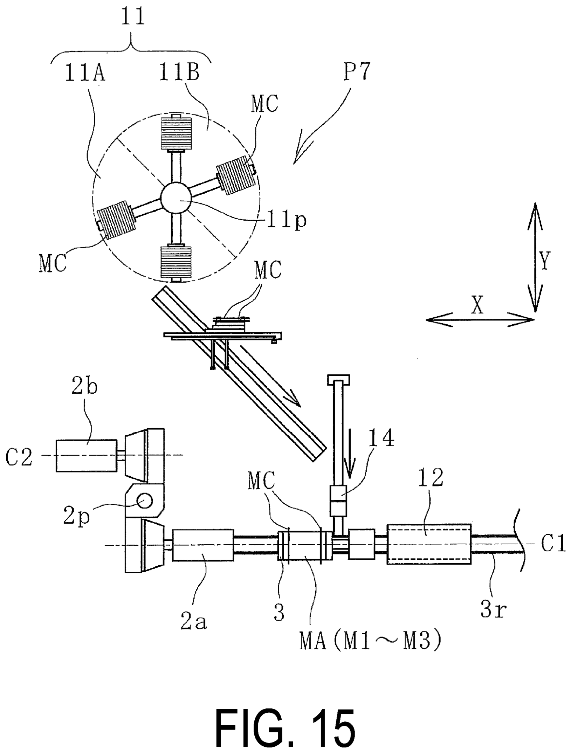

Next, as illustrated in FIG. 15, a pair of bead members MC is supplied from the bead supply unit 11A on one side and is externally fitted to the inner circumferential member MA using the bead transfer machine 14. The respective bead members MC are externally fitted to the inner circumferential member MA with an interval therebetween in the width direction (X direction).

As illustrated in FIGS. 16 to 21, the respective tire materials M4 and M5 of the outer circumferential member MB cut to predetermined lengths in advance are supplied to the belt drum 4 from the respective stock positions P4 and P5 via the corresponding slide conveyors 8d and 9d by the respective supply conveyors 8e and 9e. The material M6 is supplied, in a state of an elongated body, to the head 10e arranged below and adjacent to the belt drum 4 via the festoon portion 10c. In the belt drum 4, the outer circumferential member MB is formed using the respective tire materials M4 and M5 cut to the predetermined lengths and the tire material M6 derived from the head 10e.

Specifically, the tire materials M4, M4, and M5 fed out from the supply units 8A, 8A, and 9A on one side are cut to predetermined lengths by the respective cutters 8c, 8c, and 9c, are placed on the slide conveyors 8d, 8d, and 9d arranged in front of the supply units 8A, 8A, and 9A on one side, and are conveyed to the supply conveyors 8e, 8e, and 9e. One tire material M4 cut to a predetermined length is placed on each of the supply conveyors 8e and 8e arranged above and below as illustrated in FIG. 6.

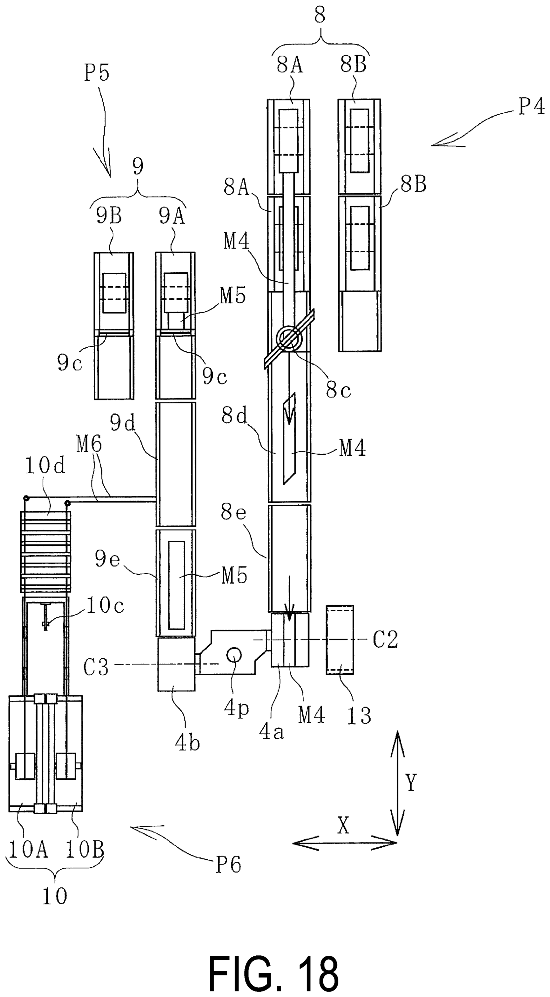

As illustrated in FIG. 18, the tire materials M4 and M4 supplied from the respective side supply units 8A and 8A on one side arranged in tandem are sequentially wound around the belt drum 4a on one side, formed into a cylindrical shape, and layered. For example, the tire material M4 cut into a predetermined length and placed on the supply conveyor 8e arranged above is wound around the belt drum 4a while rotating the belt drum 4a in one direction about the drum axial center C2 and is formed into a cylindrical shape. Next, the tire material M4 cut into a predetermined length and placed on the supply conveyor 8e arranged below is wound around the belt drum 4a while rotating the belt drum 4a in the other direction about the drum axial center C2 and is formed into a cylindrical shape.

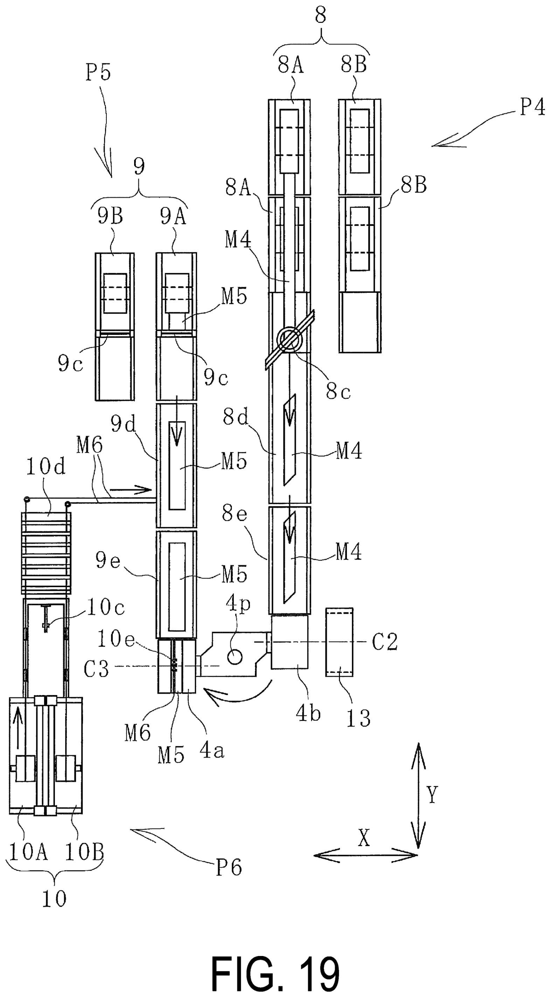

Next, as illustrated in FIG. 19, the belt drum 4 is caused to turn 180 degrees clockwise about the turning shaft 4p. Thereby, the belt drum 4a on one side is moved forward of the supply conveyor 9e, and the belt drum 4b on the other side is moved forward of the supply conveyors 8e and the 8e. Then, while rotating the belt drum 4a on one side in one direction about the drum axial center C3, the tire material M6 supplied from the supply unit 10A on one side is spirally wound around the belt drum 4a using the head 10e on one side. Thereby, a belt reinforcing layer formed of the tire material M6 is layered in a predetermined widthwise (X-direction) range of the outer circumferential surface of the tire material M4 formed into a cylindrical shape.

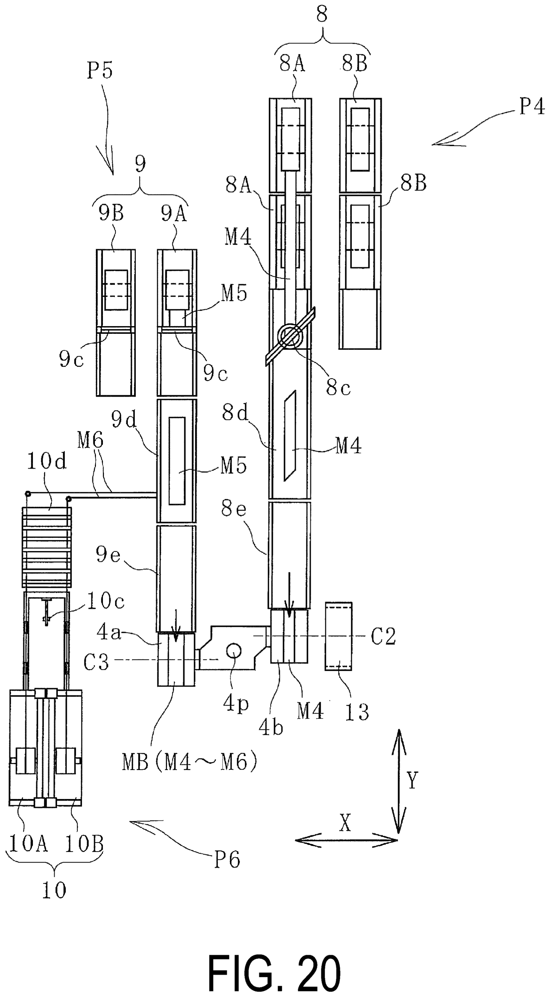

Next, as illustrated in FIG. 20, the material M5 cut into a predetermined length and placed on the supply conveyor 9e is wound around the belt drum 4a while rotating the belt drum 4a on one side in one direction about the drum axial center C3 and is formed into a cylindrical shape and layered. Thereby, a cylindrical outer circumferential side member MB in which the tire materials M4, M4, M6, and M5 are layered in this order is formed on the belt drum 4a on one side. On the belt drum 4b on the other side, while rotating the belt drum 4b about the drum axial center C2, the tire materials M4 and M4 cut into predetermined lengths and placed on the respective supply conveyors 8e and 8e are sequentially wound around the belt drum 4b and is formed into a cylindrical shape and layered.

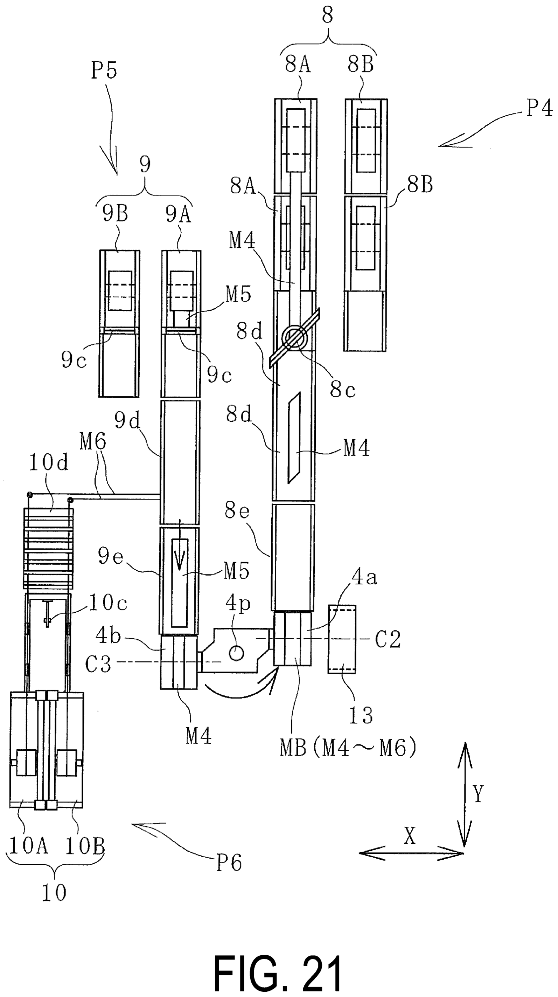

Next, as illustrated in FIG. 21, the belt drum 4 is caused to turn 180 degrees counterclockwise about the turning shaft 4p. Thereby, the belt drum 4a on one side on which the outer circumferential member MB is formed is moved toward the shaping drum 2.

As illustrated in FIG. 22, the formed inner circumferential member MA is transferred from the band drum 3 to the shaping drum 2a on one side using the band transfer machine 12. Thereby, the inner circumferential member MA and the pair of bead members MC are externally fitted into the shaping drum 2a on one side. Then, on the shaping drum 2a, both end portions in the width direction of the inner circumferential member MA are turned up around the bead members MC by a known method. Then, both turned-up end portions in the width direction of the inner circumferential member MA are pressed toward the drum axial center C1 by a known method while rotating the shaping drum 2a about the drum axial center C1.

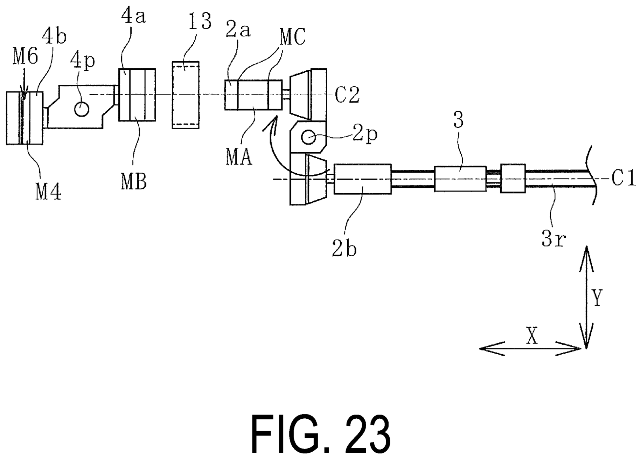

Next, as illustrated in FIG. 23, the shaping drum 2 is caused to turn 180 degrees clockwise about the turning shaft 2p. Thereby, the shaping drum side 2a on one side and the belt drum side 4a on one side are arranged side by side in the X direction.

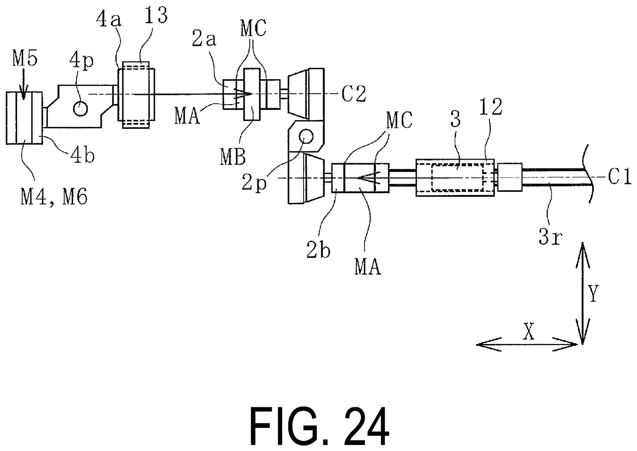

Next, as illustrated in FIG. 24, the outer circumferential member MB is transferred from the belt drum 4a on one side to the shaping drum 2a on one side using the belt transfer machine 13 and is externally fitted to the inner circumferential member MA. Then, in the shaping drum 2a, the outer circumferential surface of the inner circumferential member MA and the inner circumferential surface of the outer circumferential member MB are brought into contact with each other, and the outer circumferential member MB is pressed toward the drum axial center C2 while rotating the shaping drum 2a about the drum axial center C2, whereby the inner circumferential member MA, the outer circumferential member MB, and the pair of bead members MC are integrated to form the green tire G. The tire materials M6 and M5 are wound around the belt drum 4b on the other side in the same procedure as described above to form the outer circumferential member MB. The inner circumferential member MA and the pair of bead members MC are externally fitted to the shaping drum 2b on the other side in the same procedure as described above.

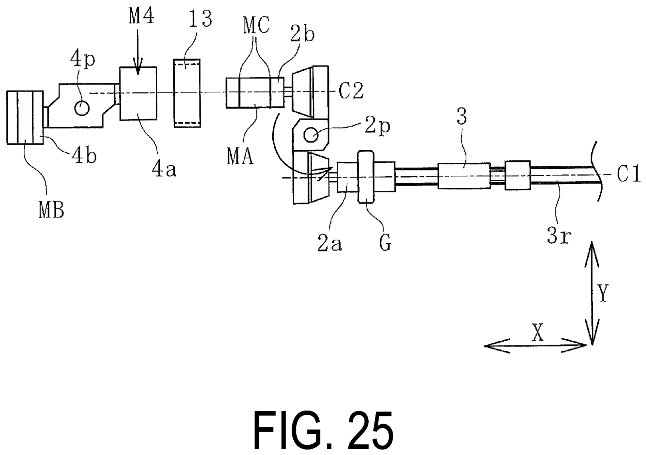

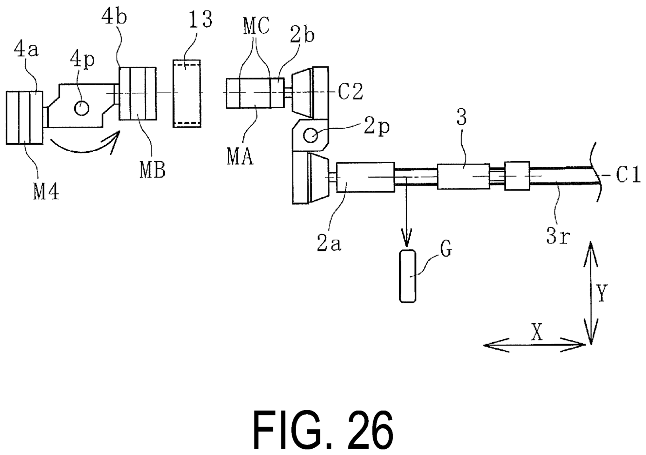

Next, as illustrated in FIG. 25, the shaping drum 2 is caused to turn 180 degrees counterclockwise about the turning shaft 2p. Thereafter, as illustrated in FIG. 26, the green tire G is removed from the shaping drum 2a on one side and conveyed to the vulcanization device 15.

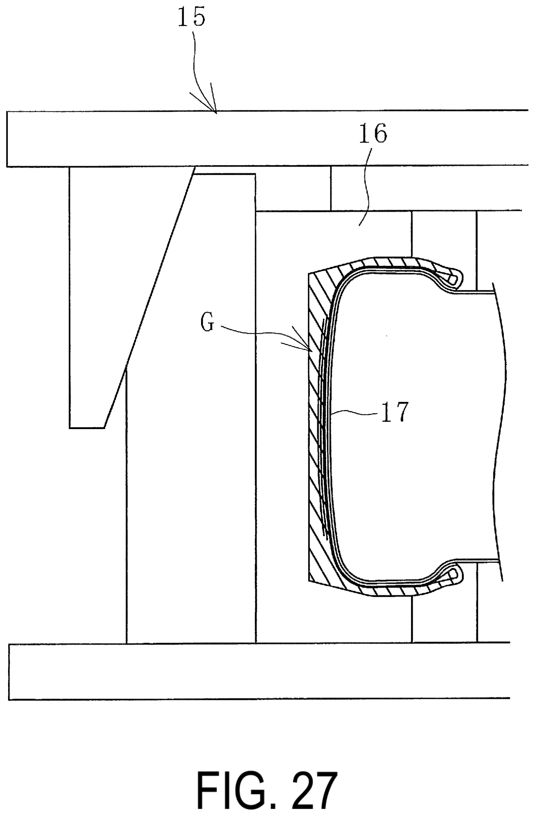

As illustrated in FIG. 27, the green tire G is arranged in the vulcanization mold 16 mounted to the vulcanization device 15. Then, the green tire G is vulcanized between the closed vulcanization mold 16 and an expanded vulcanization bladder 17, so that a tire T is completed. The vulcanization of the green tire G can be performed by various known methods. In this embodiment, the pneumatic tire T is manufactured. However, the present invention can also be applied in manufacturing other various types of tires T.

In the supply system of an embodiment of the present invention, to supply different types of tire materials M1 and M2 to the band drum 3, it is only necessary to slide the respective slide conveyors 5d and 6d and turn the turning conveyor 5e instead of moving the respective supply units 5 and 6, eliminating an excessive space. This is thus advantageous in making the forming device 1 compact. Since sliding the slide conveyors 5d and 6d and turning the turning conveyor 5e does not take a long time, it is advantageous in efficiently supplying multiple types of tire materials M1 and M2 to one band drum 3.

In the above-described forming process of the green tire G, when a predetermined number of green tires G are formed, the supply units 5A to 10A on one side, stocked with the tire materials M1 to M6, become empty at the stock positions P1 to P6 in the respective tire materials M1 to M6. As described above, at the respective stock positions P1 to P5, the slide conveyors 5d to 9d are arranged which slide in the width direction with respect to the supply units 5 to 9 arranged side by side. Therefore, when the supply units 5A to 9A on one side, stocked with the tire materials M1 to M5, become empty, the tire materials M1 to M5 can be supplied from the supply units 5B to 9B on the other side by sliding the slide conveyors 5d to 9d in the width direction of the supply units 5 to 9 arranged side by side.

That is, the slide conveyors 5d to 9d are slid forward of the supply units 5B to 9B on the other side to place the tire materials M1 to M5 cut to the predetermined lengths onto the slide conveyors 5d to 9d. Thereafter, the slide conveyors 5d to 9d are slid to transfer and supply the tire materials M1 to M5 cut to the predetermined lengths to the supply conveyors 6e to 9e. The tire materials M1 and M2 are transferred from the slide conveyors 5d and 6d to the supply conveyor 6e using the turning conveyor 5e as well. Then, while the tire materials M1 to M5 cut to the predetermined lengths are being supplied from the supply units 5B to 9B on the other side to the supply conveyors 6e to 9e, the supply units 5A to 9A emptied of the tire materials M1 to M5 are replaced with new supply units 5A to 9A stocked with the tire materials M1 to M5.

Therefore, from each of the stock positions P1 to P5, the tire materials M1 to M5 can be continuously supplied from any of the supply units 5 to 9 to the corresponding drums 3 and 4 via the slide conveyors 5d to 9d (for the tire materials M1 and M2, also via the turning conveyor 5e). This is thus advantageous in further reducing time loss due to replenishment of tire materials M1 to M5 and improving work efficiency in the tire molding step. Accordingly, it is not necessary to place and stock extra amounts of the tire materials M1 to M5 on the supply conveyors 6e to 9e in order to reduce time loss due to replenishment of tire materials M1 to M5, allowing the lengths of the supply conveyors 6e to 9e to be minimized. As a result, it is more advantageous in making the forming device 1 compact.

Further, when the pair of bead members MC in the bead supply unit 11A on one side is used up, the pair of bead members MC can be supplied from the bead supply unit 11B on the other side. While the pair of bead members MC is being supplied from the bead supply unit 11B on the other side, the bead supply unit 11A on one side emptied of the bead members MC is caused to turn from the supply position to the standby position to allow replenishment of the bead supply unit 11A with a new pair of bead members MC. This can also avoid stoppage of the molding step due to the replenishment of the pair of bead members MC.

The method of manufacturing a tire of an embodiment of the present invention including by the forming device 1 including the supply system of an embodiment of the present invention described above, forming the green tire G using the tire materials M1 and M2 and vulcanizing the green tire G is advantageous in saving space and manufacturing the tire T with high productivity.

Shortening the turning conveyor 5e, the respective supply conveyors 6e to 9e, and the respective slide conveyors 5d to 9d is advantageous in making the forming device 1 compact. The turning conveyor 5e, the respective supply conveyors 6e to 9e, and the respective slide conveyors 5d to 9d may be longer than the length of one sheet of the tire materials M1 to M5 to be placed. Therefore, the lengths of the turning conveyor 5e, the respective supply conveyors 6e to 9e, and the respective slide conveyors 5d to 9d are set to, for example, 100% or more and 150% or less, more preferably 105% or more and 130% or less, and further preferably 105% or more and 120% or less of the length of one sheet of the tire materials M1 to M5 to be placed on the conveyors.

In this embodiment, the turning conveyor 5e is installed for the supply units 5 and 6 at the two stock positions P1 and P2 in a plan view but can also be installed for the supply units at three or more stock positions. That is, the tire materials fed out from the supply units at three or more stock positions and cut to predetermined lengths may be transferred to the supply conveyor 5e via one turning conveyor 6e and supplied to the bunt drum 3.

The drum axial centers C1 of the band drum 3 and the shaping drum 2 when the inner circumferential member MA is transferred are set coaxially, and the drum axial centers C2 of the belt drum 4 and the shaping drum 2 when the outer circumferential member MB is transferred are set coaxially. Therefore, it is only necessary to move the band transfer machine 12 and the belt transfer machine 13 in the directions of the drum axial centers C1 and C2 common to the drums 2, 3, and 4, which is more advantageous in making the forming device 1 compact. As a result, it is advantageous in manufacturing the tire T with high productivity while making the forming device 1 compact.

The tire materials M1 to M5 are cut to the predetermined lengths and thus shrink over time, and the degree of shrinkage varies. However, at the respective stock positions P1 to P5, the respective tire materials M1 to M5 are stocked in a state of an elongated body, and the respective tire materials M1 to M5 are fed out from the supply units 5 to 9 and cut to the predetermined lengths. Then, the respective tire materials M1 to M5 cut to the predetermined lengths are supplied to the corresponding drums 3 and 4 via the corresponding slide conveyors 5d to 9d and supply conveyors 6e to 9e (for the tire materials M1 and M2, also via the turning conveyor 5e). In this way, cutting the tire materials M1 to M5 to the predetermined lengths immediately before the green tire G is formed is advantageous in minimizing shrinkage of the tire materials M1 to M5 over time and variation in the amount of shrinkage, compared to a case where the tire materials are cut to the predetermined lengths and stocked in advance. This also contributes to improvement in quality of the manufactured tire T.

At each of the stock positions P1 to P5, any one of the supply units 5A to 9A is set as a main supply unit, and the corresponding sliding conveyors 5d to 9d are slid to a position in front of the main supply unit 5A to 9A and are fixedly arranged, allowing a supply path to the corresponding drum 3, 4 to be formed by the main supply units 5A to 9A, the fixedly arranged slide conveyors 5d to 9d, and the corresponding supply conveyors 6e to 9e (for the tire materials M1 and M2, also by the turning conveyor 5e). In the supply path of each of the tire materials M1 to M5 formed in this way, it is not necessary to slide the slide conveyors 5d to 9d, so that the green tire G can be formed more quickly, which is advantageous in improving the forming efficiency. This also contributes to reduction in energy required for forming the green tire G.

However, when supplying the respective tire materials M1 to M5 from the supply units 5B to 9B on the other side, the slide conveyors 5d to 9d need to be slid each time the tire materials M1 to M5 are supplied from the supply units 5B to 9B to the corresponding supply conveyors 6e to 9e. This is disadvantageous in improving the forming efficiency of the green tire G and is also disadvantageous in reducing the energy required for forming the green tire G.

Therefore, in a case where the tire materials M1 to M5 of the same specification are stocked in the respective supply units 5 to 9 arranged side by side at the respective stock positions P1 to P5, when the main supply units 5A to 9A stocked with the tire materials M1 to M5 become empty, the corresponding slide conveyors 5d to 9d are slid forward of the new main supply units 5A to 9A and are fixedly arranged upon completion of work of replacing the empty main supply units 5A to 9A with a new main supply units 5A to 9A stocked with the tire materials M1 to M5. Then, a supply path to the corresponding drum 3, 4 is formed by the new main supply units 5A to 9A, the slide conveyors 5d to 9d fixedly arranged, and the corresponding supply conveyors 6e to 9e (for the tire materials M1 and M2, also by the turning conveyor 5e), so that the tire materials M1 to M5 can be supplied from the new main supply units 5A to 9A.

In this way, forming the supply path of the tire materials M1 to M5 while suppressing the frequency of sliding the slide conveyors 5d to 9d is more advantageous in improving the forming efficiency of the green tire G and further contributes to the reduction in the energy required for forming the green tire G, compared to the case where the respective tire materials M1 to M5 are continuously supplied from the supply units 5B to 9B on the other side. In order to use the main supply units 5A to 9A as the supply path of the tire materials M1 to M5 for a longer period of time than the supply units 5B to 9B on the other side, for example, the stock amount of the tire materials M1 to M5 in the supply units 5A to 9A is made larger than the stock amount in the supply units 5B to 9B on the other side.

The supply system of an embodiment of the present invention is not limited to the forming device 1 illustrated above and can be applied to various known forming devices 1. The forming drum body to which the tire material is supplied by the supply system of an embodiment of the present invention is not limited to the drums 2, 3, and 4 described above and may be, for example, a so-called rigid core having substantially the same outer surface as the inner surface of the tire T to be manufactured.

### Reference Signs List

1 Forming device
2 (2a, 2b) Shaping drum
2p Turning shaft
3 Band drum
3r Guide rail
4 (4a, 4b) Belt drum
4p Turning shaft
5 (5A, 5B) Supply unit of innerliner
5c Cutter
5d Slide conveyor
5e Turning conveyor
6 (6A, 6B) Supply unit of carcass material
6c Cutter
6d Slide conveyor
6e Supply conveyor
7 (7A, 7B) Supply unit of side portion
7c Cutter
7d Slide conveyor
7e Supply conveyor
8 (8A, 8B) Supply unit of belt member
8c Cutter
8d Slide conveyor
8e Supply conveyor
9 (9A, 9B) Supply unit of tread portion
9c Cutter
9d Slide conveyor
9e Supply conveyor
10 (10A, 10B) Supply unit of belt reinforcing member
10c Cutter
10d Festoon portion
10e Head
11 (11A, 11B) Bead supply unit
11P Turning shaft
12 Band transfer machine
13 Belt transfer machine
14 Bead transfer machine
15 Vulcanization device
16 Vulcanization mold
17 Vulcanization bladder
M Tire member
MA Inner circumferential member
MB Outer circumferential member
MC Bead member
M1 Innerliner
M2 Carcass material
M3 Side portion
M4 Belt member
M5 Tread portion
M6 Belt reinforcing member
G Green tire
T Vulcanized tire (completed tire)

## Claims

1. A system for supplying a tire material to a forming drum body, the system comprising:
a supply unit in which a tire material having a band shape is wound and stocked;
a forming drum body; and
a supply conveyor arranged between the supply unit and the forming drum body and having a configuration in which the tire material is fed out from the supply unit and is cut into tire materials each having a predetermined length and the tire materials are placed flat on the supply conveyor, supplied to the forming drum body, and formed into a cylindrical shape by being wound around the forming drum body;
a plurality of the supply units arranged side by side being at a plurality of respective stock positions, the tire materials fed out from the supply units at adjacent stock positions being of different kinds, each of the supply units being arranged such that supply directions of the tire materials intersect each other at a predetermined angle,
slide conveyors configured to slide in a parallel direction of each of the supply units being provided at the respective stock positions,
a turning conveyor configured to turn in a plan view being provided between each of the slide conveyors and the supply conveyor,
for the forming drum body and the supply conveyor installed at predetermined certain positions, the tire materials fed out from one of the supply units at each of the stock positions and cut to predetermined lengths being transferred to the supply conveyor via the corresponding slide conveyors and the turning conveyor and sequentially supplied to the forming drum body,
at each of the stock positions, when the one of the supply units stocked with the tire materials becomes empty, the tire materials fed out from the other of the supply units and cut to predetermined lengths being transferred to the supply conveyor via the corresponding slide conveyors and the turning conveyor and sequentially supplied to the forming drum body, and while the tire materials from the other of the supply units are being supplied to the forming drum body, the one of the supply units that is empty being replaced with a new one of the supply units stocked with the tire materials.

2. The system for supplying a tire material to a forming drum body according to claim 1, wherein the forming drum body and the supply conveyor installed at the predetermined certain positions and the one of the supply units at one of the stock positions are arranged in series.

3. The system for supplying a tire material to a forming drum body according to claim 2, wherein at each of the stock positions, when the one of the supply units stocked with the tire materials becomes empty, the tire materials are supplied from the new one of the supply units to the forming drum body upon completion of work of replacing the one of the supply units that is empty with the new one of the supply units stocked with the tire materials.

4. The system for supplying a tire material to a forming drum body according to any one of claims 1 to 3, wherein the predetermined angle is 85 degrees or more and 95 degrees or less.

5. The system for supplying a tire material to a forming drum body according to any one of claims 1 to 4, wherein
each of the tire materials fed out from the supply units at the respective stock positions and cut to predetermined lengths is continuously supplied to the forming drum body, an entire length and a widthwise position over the entire length of each of the tire materials cut to the predetermined lengths are detected by a sensor while the tire materials are conveyed from the turning conveyor to the supply conveyor, and
when each of the tire materials is wound around the forming drum body, a rotation speed and a widthwise position of the forming drum body are adjusted based on entire length data and widthwise position data over the entire length of each of the tire materials detected by the sensor.

6. A method of manufacturing a tire, the method comprising:
by a forming device comprising the system for supplying a tire material to a forming drum body according to any one of claims 1 to 5,
forming a green tire using the tire material; and
vulcanizing the green tire.
